(19) Europäisches Patentamt
European Patent Office
Office européen des brevets

(11) **EP 2 674 402 B1**

(12) **FASCICULE DE BREVET EUROPEEN**

(45) Date de publication et mention de la délivrance du brevet:
**13.05.2020 Bulletin 2020/20**

(21) Numéro de dépôt: **13447010.3**

(22) Date de dépôt: **12.06.2013**

(51) Int Cl.:
*C03C 17/00* $^{(2006.01)}$      *C01B 33/18* $^{(2006.01)}$
*C09D 1/00* $^{(2006.01)}$      *C09D 5/16* $^{(2006.01)}$
*C09C 1/30* $^{(2006.01)}$

(54) **Revêtement superhydrophobe**

**Superhydrophobe Beschichtung**

**Superhydrophobic coating**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2012 BE 201200390**

(43) Date de publication de la demande:
**18.12.2013 Bulletin 2013/51**

(73) Titulaire: **Etablissements Detandt - Simon 7011 Ghlin (BE)**

(72) Inventeurs:
• **de Coninck, Joël**
  **7022 Mesvin (BE)**
• **Duvivier, Damien**
  **6120 Nalinnes (BE)**

(74) Mandataire: **Powis de Tenbossche, Roland et al Cabinet Bede S.A. Boulevard Général Wahis 15 1030 Bruxelles (BE)**

(56) Documents cités:
**EP-A1- 2 116 518      WO-A2-2007/102960**
**US-A1- 2008 156 224      US-A1- 2012 021 177**

Remarques:
Le dossier contient des informations techniques présentées postérieurement au dépôt de la demande et ne figurant pas dans le présent fascicule.

EP 2 674 402 B1

**Description**

La présente invention a pour objet un revêtement superhydrophobe.

Dans le présent mémoire, on entend par revêtement super hydrophobe, un revêtement présentant une surface extérieure pour laquelle une goutte d'eau (10$\mu$l) placée sur cette surface extérieure en position horizontale définit un angle de contact statique de recul de plus de 135°, avantageusement de plus de 140°, de préférence de plus de 145°, par exemple de 145° à 160°, et/ou un angle de contact statique d'avancement de plus de 135°, avantageusement de plus de 140°, de préférence de plus de 145°, par exemple de 145° à 160°.

De nombreuses recherches ont déjà été effectuées pour obtenir un revêtement hydrophobe, voire super hydrophobe.

Ainsi pour obtenir un verre hydrophobe, il est connu de traiter la face du verre avec une composition alcoolique contenant des composés perfluorés en présence d'acides et de solvants organiques.

Bien que cette couche présente de bonnes propriétés, on a encore recherché à les améliorer à la fois d'un point de vue adhésion, durabilité et hydrophobicité.

Le demandeur a ainsi remarqué après des recherches qu'en déposant une couche extérieure de nanoparticules de silice de granulométrie de 70 à 300 nanomètres en présence de composé silane sur une sous couche de nanoparticules de silice de granulométrie inférieure aux nanoparticules de la couche extérieure présentant une rugosité appropriée, il était possible d'obtenir une face extérieure superhydrophobe, durable, résistante à la fois à l'abrasion et aux agents chimiques, mais surtout présentant de bonnes propriétés contre le détachement des poussières et débris. L'inconvénient de cette technologie est d'un point de vue coût et temps de réalisation.

Le document WO2007/102960 décrit une composition de revêtement auto-nettoyant hydrophobe comprenant de la silice et un solvant hydrocarboné.

Le document EP2116518 décrit des produits présentant des surfaces hydophobes, préparée en formant une première couche de particules d'oxyde de métal frittées, et en formant sur cette première couche un film comprenant un liant et des particules d'oxyde de métal hydrophobe.

Le document US2012/0021177 décrit un procédé pour préparer des substrats hydrophobes, en formant sur ce substrat une couche inférieure de particules d'oxyde de métal et d'un liant du type oxyde de métal, et en appliquant sur cette couche inférieure une couche hydrophobe, par exemple au moyen de silicone.

Le document US2008/0156224 décrit une méthode pour former une couche transparente hydrophobe à partir d'un précurseur de particules de moins de 400nm, du type TEOS, et de silane, siloxane ou silicone,

Le demandeur a alors cherché une solution pour obtenir, de manière simple, une face superhydrophobe à un coût très économique, mais surtout qui puisse être réalisée en un temps très court.

L'épaisseur de la sous couche et de la couche extérieure est très faible, puisque l'on recherche à obtenir sensiblement une couche unique.

Le demandeur a donc recherché à obtenir un revêtement superhydrophobe qui puisse déjà être obtenu par le dépôt d'une seule couche de particules de SiO$_2$, couche qui peut être épaisse et qui ne nécessite pas de fusion de particules sur le support. Cette couche peut être déposée en une seule étape, sans nécessité de déposer une précouche de particules de SiO$_2$. Ce revêtement est donc plus facile à déposer et présente une plus grande fiabilité de sa performance super hydrophobe.

Différents objets selon l'invention sont décrits de manière générale dans les revendications ci-jointes. La description qui suit n'est pas donnée pour limiter la portée générale définie par les revendications, mais donnée pour décrire des modes de réalisation préférentiels.

Le revêtement selon l'invention est un revêtement superhydrophobe comprenant au moins une couche extérieure d'épaisseur inférieure à 500$\mu$m, avantageusement de moins de 300$\mu$m, par exemple de moins de 250$\mu$m, en particulier de moins de 200$\mu$m, voire moins de 100 $\mu$m (cette couche extérieure ayant de préférence une épaisseur de plus de 500 nm, en particulier de plus de 1 $\mu$m, par exemple de plus de 5$\mu$m, plus spécifiquement de plus de 10$\mu$m) obtenue ou pouvant être obtenue en appliquant sur un support au moins une suspension acide fraîche constituée au moins à 97% en poids (avantageusement au moins 98% en poids, de préférence au moins 99% en poids) par :- des particules solides de granulométrie inférieure à 500$\mu$m, avantageusement inférieure à 300$\mu$m, de préférence inférieure à 100$\mu$m, lesdites particules solides étant constituées à plus de 80% en poids, avantageusement à plus de 85% en poids, de préférence à plus de 90% en poids, en particulier à plus de 95% en poids, plus spécifiquement à plus de 98% en poids d'agglomérats de nanoparticules primaires de SiO$_2$, lesdites nanoparticules primaires de SiO$_2$ desdits agglomérats présentant une granulométrie moyenne en nombre inférieure à 70nm, avantageusement inférieure à 60nm, en particulier inférieure à 50nm, lesdits agglomérats de particules de SiO$_2$ et/ou des nanoparticules de ceux-ci étant fonctionnalisés avec des groupements choisis parmi le groupe constitué de dimethyloxy, trimethyloxy et leur mélange de manière à présenter une teneur résiduelle relative en groupe SiOH comprise entre 40% et 60% de la teneur résiduelle en SiOH de particule de silice pyrogénique contenant environ 2 groupes SiOH par nm$^2$, lesdites particules représentant de 0,6% à 6% en poids, avantageusement de 1% en poids à 6% en poids, de préférence de 2% à 5% en poids, en particulier 2% à 4% en poids de la suspension;

- un alcool ou un mélange d'alcools, ledit ou lesdits alcools comprenant avantageusement de 1 à 6 atomes de carbone, de préférence de 1 à 4 atomes de carbone,
- du TEOS représentant de 2 à 20% en poids, avantageusement de 3% à 15% en poids, de préférence de 5% à 15% en poids, plus spécifiquement de 8% à 14% en poids de la suspension,
- un acide, et
- de l'eau ;

ladite suspension acide fraîche étant appliquée sur un support pour former le revêtement moins de 12 heures, avantageusement moins de 6 heures après le mélange de l'acide au TEOS en présence d'eau lorsque ce mélange est opéré et maintenu à 20°C ou moins de 20°C, pour former après séchage ledit revêtement superhydrophobe, ladite suspension acide fraîche étant en outre caractérisée :

(a) en ce qu'elle contient une quantité d'eau telle que le rapport molaire eau/TEOS soit compris entre 0,5 et 1,5,
(b) en ce qu'elle contient une quantité de TEOS telle que le rapport en poids TEOS/ particules solides soit compris entre 1 et 10, avantageusement compris entre 2 et 10, de préférence compris entre 2 et 5, et
(c) en ce qu'elle contient une quantité d'acide pour que le pH de la suspension acide fraîche mesuré à 20°C soit inférieur à 3, avantageusement à 2, en particulier inférieur à 1.

La mesure du pH peut être déterminée en utilisant un appareil "Multiline P4" de WTM avec une électrode LiCl de Hamilton. Une telle mesure de pH est décrite dans le document PCT/BE2008/000065. Dans le présent mémoire, lorsqu'il est fait référence à un pH, ce pH est mesuré à 20°C

On a remarqué qu'un revêtement préparée à partir d'une telle composition acide fraîche, c'est-à-dire préparée à partir d'une composition où les particules solides, l'alcool, le TEOS et l'acide sont mis en contact entre eux moins de 12 heures, avantageusement moins de 6 heures, de préférence moins de 3 heures, composition préparée et maintenue à 20°C ou à une température inférieure à 20°C, il était possible d'obtenir un revêtement superhydrophobe, même en l'absence de composés fluorés, présentant une excellente résistance aux acides et autres produits chimiques, mais également une bonne résistance à l'abrasion et une excellente adhésion au support. De plus, le revêtement avait une bonne résistance mécanique, en particulier quant à son écrasement, à son décollement. Elle avait également une bonne résistance chimique, ce même pour des pH acides, par exemple à des pH de 4 ou moins de 4, par exemple à des pluies acides. Même après avoir été salie avec de l'huile d'olive et lavée à l'éthanol, la couche était toujours superhydrophobe. On a également remarqué un excellent rebond des gouttes d'eau sur le revêtement selon l'invention, un tel rebond permettant d'assurer un décrassement aisé ou élimination aisée de crasses par la pluie, permettant ainsi de garder les faces plus propres. Des tests ont ainsi montré que les poussières, déchets végétaux, feuilles, etc. étaient plus facilement éliminés sur le revêtement selon l'invention, en particulier avec des angles d'inclinaison du revêtement inférieurs à 10°. Le revêtement présentait en outre une très bonne glissance pour les gouttes d'eau.

Le revêtement selon l'invention, même s'il est constitué sensiblement d'une seule couche relativement épaisse, s'est avéré être excellent pour donner une meilleure résistance à la fissuration du support.

Selon une forme de réalisation avantageuse du revêtement selon l'invention, les nanoparticules primaires de $SiO_2$ desdits agglomérats présent dans la couche extérieure et présentant une granulométrie moyenne en nombre inférieure à 70nm ont une dispersion granulométrique comportant une fraction de nanoparticules de moins de 40nm, voire même de moins de 20nm et une fraction de nanoparticules de plus de 80nm, voire de plus de 100nm.

En particulier, la dispersion granulométrique des nanoparticules primaires de $SiO_2$ desdits agglomérats présente un degré de polydispersité en nombre à 90% supérieur à 0,2, avantageusement supérieur à 0,5, de préférence supérieur à 0,7, plus spécifiquement supérieur à 1.

La taille des nano particules de $SiO_2$ est déterminée microscope électronique à transmission (TEM Transmission Electronic Microscope) ou par des techniques de diffraction laser. Dans le présent mémoire, les mesures de tailles nanométriques ont été mesurées par analyse d'images prise par microscope électronique à transmission TEM (Philips, CM200) équipé du programme de traitement d'images apte à déterminer pour une suspension alcoolique de particules un diamètre moyen pour chaque nanoparticule analysé, la distribution en nombre des nanoparticules de l'échantillon, et donc le diamètre moyen en nombre des particules de l'échantillon. Le nombre de particules mesurées pour un échantillon est par exemple spérieur à 100, en particulier supérieur à 300. Le graphe de distribution en nombre des nanoparticules permet alors de déterminer le degré de polydispersité en nombre, appelé également facteur de polydispersité en nombre. Le degré de polydispersité en nombre à 90% est déterminé par la formule suivante :

$$\frac{\text{diamètre de la fraction 90\% - diamètre de la fraction 10\%}}{((\text{diamètre de la fraction 90\%} + \text{diamètre de la fraction 10\%}) : 2)}$$

dans laquelle :

diamètre de la fraction 10% correspond au diamètre maximal des particules de la fraction représentant 10% en nombre des particules; et
diamètre de la fraction 90% correspond au diamètre maximal des particules de la fraction représentant 90% en nombre des particules.

Au plus le degré de dispersion est grand, au plus grande sera la dispersion des particules.

Selon une forme de réalisation avantageuse, le revêtement selon l'invention est préparée à partir d'une suspension acide fraîche dont le rapport molaire eau/Teos est compris entre 0,8 et 1,2, tandis que la quantité de Teos est telle que le rapport en poids Teos/ particules solides soit compris entre 2 et 5.

Des caractéristiques avantageuses ou préférentielles de revêtement selon l'invention sont décrites dans l'une quelconque des revendications ci-annexées, ces caractéristiques avantageuses ou préférentielles étant par exemple une ou plusieurs des suivantes, avantageusement une combinaison de plusieurs des suivantes :

- le revêtement superhydrophobe comporte au moins une couche intérieure (située entre le support et la couche extérieure), cette couche intérieure étant située sous la couche extérieure et comportant au moins des atomes de silicium, en particulier du $SiO_2$, cette couche intérieure étant une couche primaire résistant au milieu acide ; et/ou
- la suspension acide fraîche présente un pH (mesuré à 20°C) inférieur ou égal à 1, avantageusement inférieur ou égal à 0,5, et/ou
- le mélange eau et acide présent dans la suspension acide fraîche présente un pH inférieur à 1, avantageusement inférieur à 0,5; et/ou
- pour la suspension acide fraîche, le rapport molaire particules de $SiO_2$ / TEOS est compris entre 0,8 et 1,2; et/ou
- les particules solides de la suspension acide fraîche, en particulier au moins les agglomérats de nanoparticules de $SiO_2$, présentent une surface spécifique (BET) comprise entre $50 m^2/g$ et $150 m^2/g$, en particulier entre $75 m^2/g$ et $125 m^2/g$; et/ou
- pour au moins 95% de sa surface, il est constitué essentiellement d'une seule couche de particules solides reliées entre elles par des liens $SiO_2$; et/ou
- le revêtement a une surface supérieure ou extérieure présentant avec un facteur d'agrandissement de 50, c'est-à-dire à l'échelle d'environ 2,2mm, une moyenne quadradique de la rugosité (root mean square surface roughness) mesurée comprise entre $1,1\mu m$ et $20\mu m$, et/ou un facteur de rugosité de Wenzel supérieur à 1,2. La rugosité est déterminée par microscope à force atomique (AFM - Atomic Force Microscopy), en particulier un appareil Park Systems XE-70 de ST Instruments (Nederland), utilisant le logiciel SPIP

L'invention a encore pour objet un produit dont une face ou une couche primaire recouvrant cette face présente une résistance au milieu acide de la suspension décrite ci-dessus, pendant au moins 1 minute, ladite face ou couche primaire étant munie d'un revêtement selon l'invention, tel que décrit ci-dessus, en particulier tel que décrit dans l'une quelconque des revendications ci-jointes.

Le produit peut être un produit quelconque. Si la face du produit à recouvrir avec le revêtement super hydrophobe selon l'invention ne contient pas d'atome de Silicium ou pas assez d'atomes de Si, il est préférable de munir ladite face d'une couche primaire comprenant du Si, en particulier sous forme de $SiO_2$, couche primaire présentant une résistance au milieu acide de la suspension acide fraîche pour former le revêtement selon l'invention.

Selon une forme de réalisation avantageuse, avant d'appliquer la suspension sur une face du produit, ladite face est munie d'une couche primaire présentant une résistance au milieu acide de la suspension, cette couche primaire comprenant des atomes de silicium, en particulier des particules de $SiO_2$.

L'invention a encore pour objet une méthode pour appliquer un revêtement superhydrophobe suivant l'invention présentant une surface extérieure pour laquelle une goutte d'eau ($10\mu l$) placée sur cette surface extérieure en position horizontale définit un angle de contact statique de recul de plus de 135° et/ou un angle de contact statique d'avancement de plus de 135°, le long d'une face d'un produit ou d'un support contenant avantageusement des atomes de silice, cette méthode comprenant les étapes suivantes :

- traitement de la face à recouvrir pour en éliminer au moins des corps gras et/ou des poussières;
- au moins si ladite face ne présente pas une résistance au milieu aqueux acide de la suspension acide fraîche pendant au moins 1 minute, application d'une couche primaire résistante audit milieu acide sur ladite face,
- application sur ladite face ou sur la couche primaire résistante audit milieu acide, éventuellement après mouillage de ladite face ou couche résistante au moyen d'un milieu aqueux acide, d'une suspension acide fraîche constituée au moins à 97% en poids par :

  - des particules solides constituées à plus de 80% en poids, avantageusement plus de 85% en poids, de préférence à plus de 90% en poids d'agglomérats de nanoparticules primaires de $SiO_2$, lesdites nanoparticules primaires de $SiO_2$ desdits agglomérats présentant une granulométrie moyenne en nombre inférieure à 70nm, lesdits agglomérats de nanoparticules de $SiO_2$ et/ou des nanoparticules de ceux-ci étant fonctionnalisés avec des groupements choisis parmi le groupe constitué de dimethyloxy, trimethyloxy et leur mélange de manière à présenter une teneur résiduelle relative en groupe SiOH comprise entre 40% et 60% de la teneur résiduelle en SiOH de particule de silice pyrogénique contenant 2 groupes SiOH par $nm^2$, lesdites particules représentant de 0,6 à 6% en poids de la suspension;
  - un alcool ou un mélange d'alcools,
  - du TEOS représentant de 2 à 20% en poids de la suspension, et
  - de l'acide et de l'eau;

  ladite suspension acide fraîche étant caractérisée :

  (a) en ce qu'elle contient une quantité d'eau telle que le rapport molaire eau/TEOS soit compris entre 0,5 et 2,5, avantageusement entre 0,5 et 2, de préférence entre 0,5 et 1,5,
  (b) en ce qu'elle contient une quantité de TEOS telle que le rapport en poids TEOS/ particules solides soit compris entre 1 et 10, et
  (c) en ce qu'elle contient une quantité d'acide pour que le pH de la suspension fraîche mesuré à 20°C soit inférieur à 3, avantageusement inférieur ou égal à 1,

  de manière à appliquer ladite suspension sur ladite face ou couche primaire résistante au milieu acide moins de 12 heures après le mélange ou la mise en contact de l'acide avec le TEOS en présence d'eau lorsque ce mélange ou cette mise en contact est opéré et maintenu à une température de 20°C ou moins;

- élimination de la quantité excédentaire éventuelle de suspension présente sur ladite face et/ou la couche primaire résistante au milieu acide, et
- séchage du revêtement. Le séchage peut être opéré à température ambiante, mais est de préférence opéré au moins partiellement à une température supérieure à 50°C. La durée de séchage sera fonction de la température, de la pression ou du vide, de l'épaisseur de la couche de suspension, mais également du type d'alcool. Le séchage sera naturellement opéré à une température inférieure à la température de ramollissement des agglomérats, mais également à une température en fonction de la durée de séchage qui ne soit pas apte à dégrader le support ou la couche primaire éventuelle.

Si la suspension est maintenue à une température inférieure à 20°C, il est possible de l'appliquer plus de 12 heures après sa préparation. Si la suspension est maintenue à une température supérieure à 30°C, il est préférable d'utiliser la suspension moins de 3 heures, en particulier moins d'une heure après le mélange Teos avec l'acide en présence d'eau.

Avantageusement, la suspension telle que définie dans les revendications est préparée par mélange (a) d'une composition constituée au moins à 97% en poids par :

- des particules solides constituées à plus de 90% en poids d'agglomérats de particules primaires de $SiO_2$, lesdites particules primaires de $SiO_2$ présentant une granulométrie moyenne en nombre inférieure à 70nm, avantageusement de moins de 60nm, de préférence de moins de 50nm, en particulier d'environ 40nm, lesdits agglomérats de particules de $SiO_2$ étant fonctionnalisés avec des groupements choisis parmi le groupe constitué de dimethyloxy, trimethyloxy et leur mélange de manière à présenter une teneur résiduelle relative en groupe SiOH comprise entre 40% et 60% de la teneur résiduelle en SiOH de particule de silice pyrogénique contenant 2 groupes SiOH par $nm^2$,
- un alcool ou un mélange d'alcools,

- du TEOS, avec

(b) un milieu aqueux acide moins de 12 heures, avantageusement moins de 8 heures, de préférence moins de 6 heures avant l'application de la suspension sur ladite face et/ou couche primaire résistante au milieu acide, lorsque la suspension est préparée et maintenue à 20°C ou moins.

On a de plus remarqué que la préparation de la suspension à froid combiné avec un mode de mélange par ultrason assurait une bonne homogénéisation du mélange et donc de la suspension. Le revêtement obtenu par une telle suspension acide fraîche mélangée par ultrason présentait une face extérieure très homogène.

Selon un détail avantageux d'une forme de réalisation, on applique sur ladite face ou sur la couche résistante un milieu aqueux acide avantageusement exempt de TEOS, avant d'appliquer sur cette face ou couche au moins une composition constituée au moins à 97% en poids par :

- des particules solides constituées à plus de 80% en poids, avantageusement à plus de 85% en poids, de préférence à plus de 90% en poids d'agglomérats de nanoparticules primaires de $SiO_2$, lesdites particules primaires de $SiO_2$ présentant une granulométrie moyenne en nombre inférieure à 70nm, avantageusement de moins de 60nm, de préférence de moins de 50nm, en particulier d'environ 40nm, lesdits agglomérats de nanoparticules de $SiO_2$ et/ou des nanoparticules de ceux-ci étant fonctionnalisés avec des groupements choisis parmi le groupe constitué de dimethyloxy, trimethyloxy et leur mélange de manière à présenter une teneur résiduelle relative en groupe SiOH comprise entre 40% et 60% de la teneur résiduelle en SiOH de particule de silice pyrogénique contenant 2 groupes SiOH par $nm^2$,
- un alcool ou un mélange d'alcools,
- du TEOS,

cette composition étant sensiblement exempte d'eau et d'acide,
pour former sur ladite face ou couche une suspension telle que définie plus haut ou dans les revendications.

Selon une autre forme de réalisation, on applique sur ladite face ou sur la couche primaire résistante un milieu aqueux acide, avant d'appliquer sur cette face ou couche (a) une composition constituée au moins à 97% en poids par :

- des particules solides constituées à plus de 80% en poids, avantageusement à plus de 85% en poids, de préférence à plus de 90% en poids d'agglomérats de particules primaires de $SiO_2$, lesdites particules primaires de $SiO_2$ présentant une granulométrie moyenne en nombre inférieure à 70nm, avantageusement de moins de 60nm, de préférence de moins de 50nm, en particulier d'environ 40nm, lesdits agglomérats de particules de $SiO_2$ étant fonctionnalisés avec des groupements choisis parmi le groupe constitué de diméthyloxy, trimethyloxy et leur mélange de manière à présenter une teneur résiduelle relative en groupe SiOH comprise entre 40% et 60% de la teneur résiduelle en SiOH de particule de silice pyrogénique contenant 2 groupes SiOH par $nm^2$;
- un alcool ou un mélange d'alcools,
- du TEOS,

cette composition étant sensiblement exempte d'eau et d'acide, et ensuite (b) un milieu aqueux acide,
pour former sur ladite face ou couche une suspension telle que définie plus haut ou dans les revendications.

Selon une particularité d'une forme de réalisation, on projette ladite composition et ledit milieu aqueux acide simultanément vers ladite face, de manière à assurer le mélange de ladite composition avec ledit milieu acide pour former une suspension telle que définie à la revendication 1 au moins sur ladite face.

Selon des caractéristiques de formes de réalisation,

- on applique ladite suspension et/ou ladite composition et/ou ledit milieu acide sur ladite face ou couche à une température inférieure à 30°C, de préférence comprise entre -10°C et 20°C, et/ou
- le séchage du revêtement est au moins partiellement opéré à une température supérieure à 50°C pendant au moins 1 minutes, mais à une température inférieure à la température de ramollissement des agglomérats de nanoparticules, et/ou
- après élimination de la quantité excédentaire éventuelle de suspension présente sur ladite face et/ou sur la couche résistante, on traite le revêtement, avantageusement avant son séchage, avec un milieu aqueux acide (présentant avantageusement un pH inférieur à 3, par exemple inférieur à 2, en particulier inférieur à 1, en présence d'au moins un tensioactif, et/ou
- ladite suspension déposée sur ladite face ou sur ladite couche primaire résistant au milieu acide est adaptée pour présenter une ou plusieurs des caractéristiques de la suspension décrite ci-dessus ou dans les revendications ci-jointes.

La méthode suivant l'invention comprend avantageusement une ou plusieurs des caractéristiques du revêtement selon l'invention telles que donné ci-dessus et/ou telles que revendiquées.

L'application de la suspension sur la face ou sur la couche primaire peut être opérée au pinceau, à la brosse, au rouleau, en plongeant le support dans un bain, en laissant la suspension coulée le long de la face ou couche primaire, par pulvérisation, par exemple au moyen d'un appareil de pulvérisation Air Brush, modèle 360 de Badger.

Dans le cas d'une application par pulvérisation, on peut utiliser des compositions distinctes, par exemple une première composition non acide comprenant du TEOS et une deuxième composition aqueuse acide ne contenant pas de TEOS, qui sont soit mélangées ensemble juste avant d'être pulvérisées, soit pulvérisées séparément pour former un mélange pendant l'étape de pulvérisation (par exemple avant le contact des compositions avec la face à munir d'un revêtement, ou lors du ou après le contact des compositions avec la face à munir d'un revêtement.

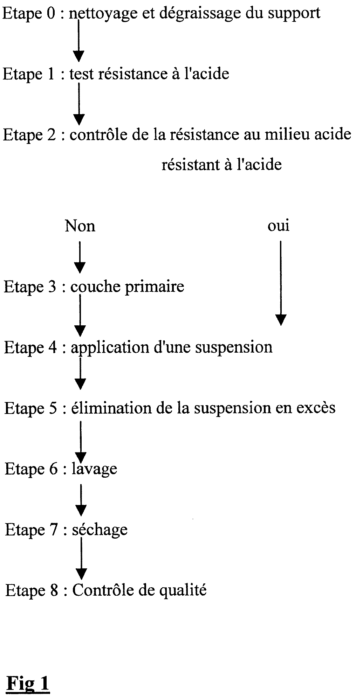

Des particularités et détails de l'invention ressortiront de la description détaillée suivante dans laquelle il est fait référence aux figures 1 à 4 qui montrent schématiquement des étapes de méthodes pour appliquer un revêtement selon l'invention sur une face d'un support.

Des compositions ou des suspensions ont été préparées à partir des composés ou produits suivants:

TEOS : Tétra-éthyl-orththo-silicate ou orthosilicate de tétraéthyl

Alcool 1 : éthanol à 99,8% (en poids) d'alcool contenant 20ppm de bitrex (R)

Alcool 2 : éthanol à 99,8% (en poids) contenant environ 0,5% de phthalate de diéthyle

Alcool 3 : éthanol à 99,8% (en poids) contenant 0,1% (en poids) d'alcool terbutylique et 20ppm de bitrex (R)

Alcool 4 : méthanol à plus de 99,8% en poids

Acide chlorhydrique : HCl à 37% (pourcentage massique)

Silice 1 : silice amorphe synthétique hydrophobe de granulométrie moyenne en nombre égale à environ 40nm (granulométrie des particules primaires mesurée par microscope électronique à transmission, TEM, Phillips, CM360). Les particules sont de couleur blanche et sont traitées en surface pour présenter des fonctions diméthyl siloxy. La surface spécifique BET des particules est comprise entre 110 et 140m$^2$/g (méthode décrite au paragraphe 0051 de US2010/0196811 - DIN EN ISO 9277/DIN 66132). La teneur résiduelle relative en surface de groupe SiOH (par rapport à la teneur en silanol de la silice pyrogénique hydrophile, qui est d'environ 2 groupes SiOH par nm$^2$) est d'environ 50%, c'est-à-dire que la teneur relative en silanol pour la silice hydrophobe est d'environ 1 groupe SiOH par nm$^2$. La teneur résiduelle relative en surface de groupe SiOH est par exemple déterminée par la méthode dont il est fait référence au paragraphe 0047 de US2010/0196811 publié le 5 août 2010 ou au paragraphe 0161 de US2007/0281878, à savoir par une titration acide-base par G.W. Sears, Anal. Chem., 1956, 28, 1981 et 12, 1950.

La teneur en carbone des particules est de moins de 2% (teneur mesurée par la méthode décrite au paragraphe 0162 de US2007/281878, à savoir par analyse élémentaire du carbone, par combustion d'un échantillon à plus de 1000°C dans un courant d'oxygène, et par détection et quantification du $CO_2$ produit en utilisant des détecteurs infra rouge, par exemple de l'appareil LECO 244 commercialisé par Leco Corporation, MI, USA.. Une dispersion à 4% en poids de particules dispersées dans un milieu liquide constitué de 50% en poids d'eau et de 50% en poids de méthanol présente un pH d'environ 4,5. De telles particules sont commercialisées sous le nom HDK H13L - Pyrogenic Silica par Wacker-Chemie, Allemagne. Les particules utilisées présentaient un degré de polydispersité mesuré de 0,5.

Silice 2 : silice amorphe synthétique hydrophobe de granulométrie moyenne en nombre égale à environ 40nm (granulométrie des particules primaires mesurée par microscope électronique à transmission, TEM, Phillips, CM360). Les particules sont de couleur blanche et sont traitées en surface pour présenter des fonctions diméthyl siloxy. La surface spécifique BET des particules est comprise entre 170 et 230m$^2$/g. La teneur résiduelle relative en surface de groupe SiOH (par rapport à la teneur en silanol de la silice pyrogénique hydrophile, qui est d'environ 2 groupes SiOH par nm$^2$) est d'environ 25%, c'est-à-dire que la teneur relative en silanol pour la silice hydrophobe est d'environ 0,5 groupe SiOH par nm$^2$.

La teneur en carbone des particules est de moins de 2%. Une dispersion à 4% en poids de particules dispersées dans un milieu liquide constitué de 50% en poids d'eau et de 50% en poids de méthanol présente un pH d'environ 4,5. De telles particules sont commercialisées sous le nom HDK H20 - Pyrogenic Silica par Wacker-Chemie, Allemagne. Les particules utilisées présentaient un degré de polydispersité mesuré de 0,7.

Silice 3 avec charge négative: silice amorphe synthétique hydrophyle de granulométrie moyenne en nombre égale à environ 40nm (granulométrie des particules primaires mesurée par microscope électronique en transmission - Transmission Electron Microscope TEM, Philipps, CM200). Les particules sont de couleur blanche et présentent une surface BET d'environ 125m$^2$/g. En surface, les particules sont traitées avec du polydiméthylsiloxane. La teneur résiduelle relative en surface de groupe SiOH (par rapport à la teneur en silanol de la silice pyrogénique hydrophile, qui est d'environ 2 groupes SiOH par nm$^2$) est de moins de 25%, c'est-à-dire que la teneur relative en silanol pour la silice hydrophobe est de moins de 0,5 groupe SiOH par nm$^2$. La teneur en carbone des particules est de moins de 3%. Une dispersion à 4% en poids de particules dispersées dans un milieu liquide constitué de 50% en poids d'eau et de 50% en poids de méthanol présente un pH d'environ 4 - 5. De telles particules sont commercialisées sous le nom HDK H13TD - Pyrogenic Silica par Wacker-Chemie, Allemagne. Les particules utilisées présentaient un degré de polydispersité mesuré de 0,5.

On a préparé différentes compositions que l'on a ensuite appliquées en une seule opération sur une surface en verre préalablement nettoyée. Deux minutes après application de la composition sur la surface en verre, on a rincé la surface traitée au moyen d'éthanol et on a séché la surface traitée à 60°C pendant 10minutes.

On a ensuite mesuré pour chacune des surfaces traitées et séchées l'angle de contact statique de recul et l'angle de contact statique d'avancement pour déterminer s'il est bien supérieur à 135°. On a également mesuré l'angle de glissance en déterminant l'inclinaison à donner à la surface du revêtement par rapport à un plan horizontal, pour qu'une goutte d'eau de 10μl coule vers le bas.

Pour la préparation des compositions on a préparé d'une part une dispersion de silice en mélangeant la silice dans l'alcool. On a ensuite ajouté à cette dispersion le TEOS. Enfin on a ajouté l'acide, éventuellement prémélangé à une quantité d'éthanol et/ou de méthanol. Cette dispersion a été soumise à une phase d'homogénéisation par ultrasons pendant 5 minutes après l'ajout du milieu acide.

Le tableau suivant reprend la composition des dispersions préparées, le temps T écoulé entre l'ajout du milieu acide au mélange et l'application de la dispersion ou suspension sur la surface en verre, ainsi que les angles de contact statique de recul et d'avancement ($\alpha$ recul; $\alpha$ avancement), et l'angle de glissance.

Avec les revêtements selon l'invention, l'angle de glissance était très faible. Pour ces revêtements, on a indiqué moins de 5°, même si l'angle mesuré était plus proche de 1 à 2°. Pour les revêtements non selon l'invention, l'angle de glissance est supérieur à 20°.

| Dispersion | Silice | alcool | acide | TEOS | pH | Temps T (minutes ou heures) | α recul supérieur à 135° | angle de glissance ° | α avancement supérieur à 135° |
|---|---|---|---|---|---|---|---|---|---|
| 1 **invention** | 2g Silice 1 | 50 ml alcool 1 | 1ml HCl | 6ml | inférieur à 1 | 10 minutes | oui, supérieur à 145° | inférieur à 5° | oui, supérieur à 145° |
| 2 **pas selon invention** | 2g Silice 1 | 50 ml alcool 1 | 1ml HCl | 6ml | inférieur à 1 | 16heures | non | supérieur à 20° | non |
| 3 **pas selon invention** | 10g Silice 1 | 50 ml alcool 1 | 1 ml HCl | 6ml | inférieur à 1 | 10 minutes | non | supérieur à 20° | non |
| 4 **invention** | 1g Silice 1 | 50ml alcool 1 | 1 ml HCl | 6ml | inférieur à 1 | 10 minutes | oui inférieur à 145° | inférieur à 5° | oui inférieur à 145° |
| 5 **pas selon invention** | 1g Silice 1 | 50ml alcool 1 | 1 ml HCl | 6ml | inférieur à 1 | 13 heures | non | supérieur à 20° | non |
| 6 **pas selon invention** | 2g Silice 1 | 50 ml alcool 1 | 3 ml HCl | 6ml | inférieur à 1 | 15 minutes | non | supérieur à 20° | non |
| 7 **pas selon invention** | 2g Silice 1 | 50 ml alcool 1 | 0,2ml HCl | 6ml | inférieur à 1 | 15 minutes | non | supérieur à 20° | non |
| 8 **pas selon invention** | 2g Silice 2 | 50 ml alcool 1 | 1 ml HCl | 6ml | inférieur à 1 | 15 minutes | non | supérieur à 20° | non |
| 9 **pas , selon invention** | 6 g Silice 1 | 30ml alcool 1 | 1 ml HCl | 6ml | inférieur à 1 | 15 minutes | non | supérieur à 20° | non |
| 10 **invention** | 2 g Silice 1 | 50 ml alcool 2 | 1ml HCl | 6ml | inférieur à 1 | 10 minutes | oui | inférieur à 5° | oui |
| 11 **invention** | 2 g Silice 1 | 50 ml alcool 3 | 1ml HCl | 6ml | inférieur à 1 | 20 minutes | oui | inférieur à 5° | oui |
| 12 **invention** | 2 g Silice 1 | 50 ml alcool 4 | 1ml HCl | 6ml | inférieur à 1 | 10 minutes | oui | inférieur à 5° | oui |
| 13 **invention** | 1,8 g Silice 1 0,2 g Silice 2 | 50ml Alcool 1 | 1 ml HCl | 6ml | inférieur à 1 | 10 minutes | oui | inférieur à 5° | oui |
| 14 **pas selon invention** | 2g Silice 1 | 50ml Alcool 1 | 1ml HCl dilué avec 2ml d'eau | 6ml | inférieur à 1 | 15 minutes | non | supérieur à 20° | non |

| Dispersion | Silice | alcool | acide | TEOS | pH | Temps T (minutes ou heures) | α recul supérieur à 135° | angle de glissance ° | α avancement supérieur à 135° |
|---|---|---|---|---|---|---|---|---|---|
| 15 **pas selon invention** | 2g Silice 3 | 50 ml Alcool 1 | 1ml HCl | 6ml | inférieur à 1 | 15 minutes | non | supérieur à 20° | non |
| 16 **pas selon invention** | 2g Silice 3 | 50 ml Alcool 1 | 1ml HCl | 6ml | inférieur à 1 | 40 minutes | non | supérieur à 20° | non |
| 17 **invention** | 1g Silice 1 | 50ml Alcool 1 | 0,5ml HCl | 2ml | inférieur à 1 | 20minutes | oui | inférieur à 5° | oui |
| 18 **pas selon invention** | 0,3g Silice1 | 50ml Alcool 1 | 0,5ml HCl | 1ml | inférieur à 1 | 30minutes | non | supérieur à 20° | non |

Ce tableau montre donc clairement que la sélection des composés utilisés pour la suspension et le temps écoulé depuis le mélange du milieu aqueux acide à la composition formée par TEOS, particules de $SiO_2$ et alcool sont des paramètres importants.

Sans être limité à une quelconque théorie, on suppose que le TEOS va former une couche autour des particules de $SiO_2$, cette couche adhérant aux particules via les sites silanol encore existant. Des liens $SiO_2$ vont ainsi se former entre des atomes de silice de particules adjacentes, mais également entre les particules et des atomes de silice du support en verre.

Pour le revêtement correspondant à la dispersion ou suspension 1, on a déterminé si le revêtement présentait une porosité pour l'humidité ambiante. Cette détermination a été effectué au moyen d'un ellipsomètre porosimètre atmosphérique (EPA commercialisé par Semilab Sopra, Courbevoie, France) qui donne une courbe d'adsorption-désorption de l'humidité à 20°C, courbe définie par l'angle Phi de la tangente. Pour ce faire, le revêtement est placé dans une atmosphère dont le taux d'humidité varie. Les courbes d'adsorption - désorption se chevauchent, indiquant dès lors que le revêtement superhydrophode selon l'invention n'absorbe pas d'humidité.

La rugosité du revêtement correspondant à la dispersion ou suspension 1 était caractérisé par un facteur de Wenzel de 1,28 mesuré avec un grossissement de 50, par une appareil AFM utilisant le logiciel SPIP.

L'épaisseur de ce revêtement correspondant à la suspension ou dispersion 1 était d'environ $1\mu m$.

La dispersion 1 a été préparée à nouveau, mais le mélange a été opéré à 15°C par ultrason. La dispersion était très homogène. Le revêtement obtenu au moyen de cette dispersion 1 plus homogène (par application 20 minutes après le début de la phase de mélange) était un revêtement similaire au revêtement selon l'invention du tableau ci-dessus, mais présentant une plus grande homogénéité.

Les revêtements selon l'invention présentaient une bonne résistance à l'abrasion, mais également aux agents chimiques divers.

Exemple 2

La figure 1 montre schématiquement des étapes pour munir une face d'un support d'un revêtement suivant l'invention.

Etape 0 : nettoyage et dégraissage de la face à munir d'un revêtement superhydrophobe.

Etape 1 : la face à munir d'un revêtement superhydrophobe est testée pour évaluer sa résistance au milieu acide de la suspension.

Etape 2 : contrôle de la résistance au milieu acide et/ou d'autres propriétés de la face

Si la résistance au milieu acide n'est pas suffisante, la face du support est munie d'une couche primaire résistante au milieu acide au moins pendant 5minutes.

Même si la face a une résistance suffisante au milieu acide, il peut être intéressant de prévoir la pose d'une couche primaire, par exemple pour assurer un meilleur accrochage du revêtement ou pour assurer d'autres propriétés.

Etape 3 : couche primaire

Une telle couche primaire peut être déposée sur ladite face en utilisant de nombreuses compositions, en particulier des compositions contenant du silicone ou du siloxane, avec des procédés tels que la pulvérisation, le brossage, en plongeant le matériau dans un bain, par déposition en phase vapeur, etc.

A titre d'exemple uniquement, on peut faire référence à la demande de brevet US2004/0175579 qui enseigne une méthode de passivation de surface, par exemple métallique, en traitant la surface au moyen de gaz d'hydrure de silicium, ou encore à des peintures organiques et/ou inorganiques, en particulier des peintures contenant des composés polysiloxane, par exemple des peintures epoxy siloxane ou epoxy polysiloxane ou acrylique(ou méthacrylique) siloxane. (voir par exemple l'article "Polysiloxane coatings innovations" par Norman R. Mowrer, http://www.corrdefense.org/Academia%20Government%20and%20Industry/T-63.pdf.) A titre d'exemple particulier, on peut utiliser un liant hybride silicone époxy SILIKOPON EF commercialisé par Evonik Tego Chemie GmbH, Allemagne. Ce liant hybride est avantageusement appliqué après addition d'agent dispersant et d'agent de réticulation ou de durcissement (Dynasilan Ameo (R)). Des détails de telles formulations sont donnés sur le site de la société EVONIK TEGO CHEMIE.

Cette couche primaire est par exemple appliquée à température ambiante.

Etape 4 : application d'une suspension sur la face résistant au milieu acide ou sur la couche primaire

On applique par exemple au pinceau ou à la brosse la suspension 1 ou 4 du tableau précédent sur la face ou la couche primaire.

Etape 5 : élimination de la suspension en excès

5minutes après l'application de la suspension sur la face ou la couche primaire, on retire la quantité excédentaire de suspension avec une raclette.

Etape 6 : lavage

On lave la face recouverte de la suspension avec une solution alcoolique, avantageusement acide, pour retirer les particules n'adhérant pas suffisamment au support. Cette étape de lavage peut également être effectuée par jet de vapeur d'eau.

Etape 7 : séchage

Bien que ce séchage puisse être effectué à température ambiante, le séchage est avantageusement effectué à une température de 30 à 60°C, par exemple dans une chambre inerte par rayonnement.
Au cas où le lavage comporte un traitement à la vapeur d'eau, le séchage peut consister seulement en un traitement au moyen d'une peau de chamois.

Etape 8 : Contrôle de qualité

Les angles de contact statiques de recul et d'avancement ont été déterminés par la méthode décrite dans l'article de R. Rioboo, B. Delattre, D. Duvivier, A. Vaillant et J. De Coninck, "Superhydrophobicity and liquid repellency of solutions on polypropylene", Adv. Colloid Interface Sci., 2012, 175, 1-10..

Exemple 3

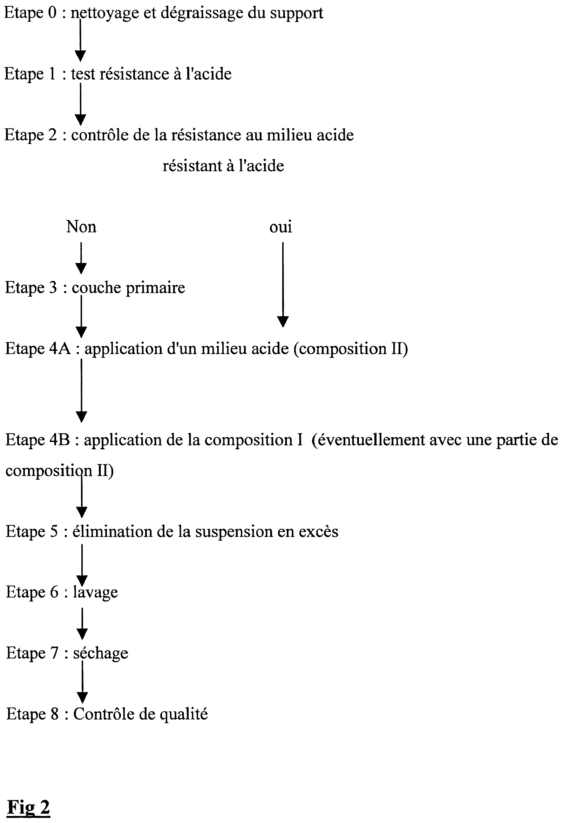

Le procédé selon cet exemple est représenté schématiquement à la figure 2.
Pour la réalisation de ce procédé on prépare d'une part, une première composition alcoolique comprenant les particules de silice et le TEOS, cette première composition I étant sensiblement exempte d'eau, et d'autre part une deuxième composition II alcoolique comprenant l'acide et l'eau .
Les compositions I et II une fois mélangées forment alors une suspension selon l'invention, par exemple la suspension 1 ou 4.
Des exemples de compositions I et II destinées à être mélangées entre elles pour former une suspension 1 ou 4 sont donnés dans le tableau suivant.

| suspension | composition I | Composition II |
|---|---|---|
| 1 | 2g silice 1 50ml alcool 1 6ml TEOS | 1 ml HCl à 37% (solution aqueuse) |
| 1 | 2g Silice 1 40ml alcool 1 6ml TEOS | 1ml HCl à 37% 10ml alcool 1 |
| 1 | 2g Silice 1 30ml Alcool 1 6ml TEOS | 1ml HCl à 37% 20ml alcool 1 |
| 4 | 1g Silice 1 50ml alcool 1 6ml TEOS | 1ml HCl à 37% |
| 4 | 1g Silice 1 | 1ml HCl à 37% |

(suite)

| suspension | composition I | Composition II |
|---|---|---|
|  | 30ml alcool 1<br>6ml TEOS | 20ml alcool |
| 4 | 1g Silice 1<br>20ml alcool 1<br>6ml TEOS | 1ml HCl à 37%<br>30ml alcool 1 |

Selon ce procédé, on effectue les étapes de l'exemple 2, si ce n'est que l'étape 4 est remplacée par les étapes suivantes :

Etape 4A : application du milieu acide (composition II) sur la face ou couche primaire, par exemple par pulvérisation ou brossage

Etape 4B : application de la composition I sur la face ou couche primaire humidifiée par la composition II.

Selon une variante de cette méthode, lors de l'étape 4A on utilise qu'une partie de la composition II, l'autre partie de la composition II étant pulvérisée sur la face après application de la composition I.

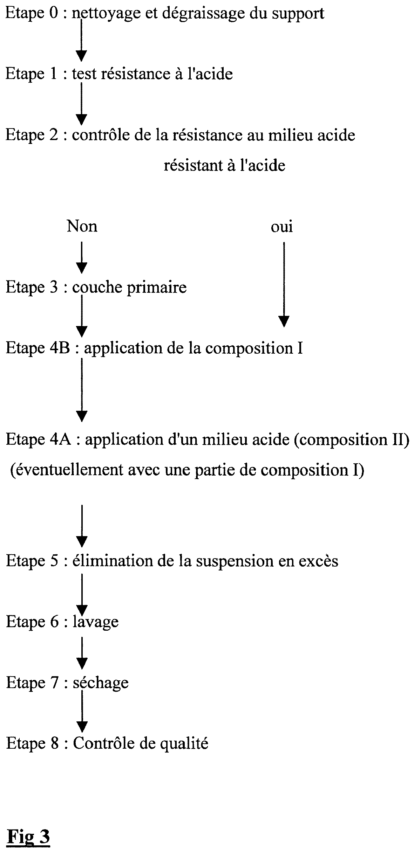

Exemple 4 (voir figure 3)

Cette méthode est similaire à la méthode de l'exemple 3, si ce n'est que l'application du milieu acide (étape 4A) (éventuellement avec une partie de composition II) est effectuée sur la face ou couche primaire sur laquelle la composition II est appliquée (Etape 4B).

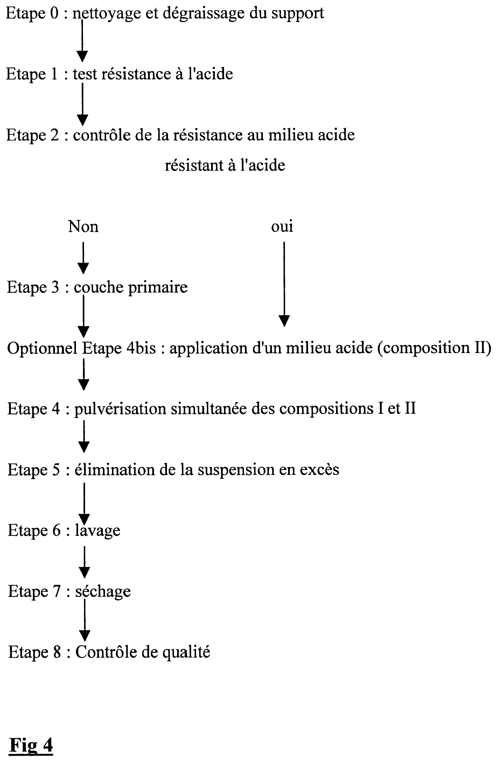

Exemple 5 (voir figure 4)

Dans cet exemple, la méthode de l'exemple 3 est répétée, si ce n'est que les compositions I et II sont pulvérisées simultanément sur ladite face ou couche primaire de manière à ce que les compositions I et II soient en contact l'une avec l'autre avant de toucher ladite face ou couche primaire. Selon une variante avantageuse, la face ou couche primaire est d'abord traitée avec une partie de la composition II (Etape 4bis) avant que la composition I et le reste de la composition II ne soient projetés simultanément sur la face ou couche primaire.

**Revendications**

1. Revêtement superhydrophobe présentant une surface extérieure pour laquelle une goutte d'eau ($10\mu$l) placée sur cette surface extérieure en position horizontale définit un angle de contact statique de recul de plus de 135° et/ou un angle de contact statique d'avancement de plus de 135°, ledit revêtement comprenant au moins une couche extérieure d'épaisseur inférieure à $500\mu$m apte à être obtenue, en particulier obtenue, en appliquant sur un support au moins une suspension acide fraîche constituée au moins à 97% en poids par :

    - des particules solides de granulométrie inférieure à $500\mu$m, avantageusement inférieure à $300\mu$m, lesdites particules solides étant constituées à plus de 80% en poids, avantageusement à plus de 85% en poids, de préférence à plus de 90% en poids d'agglomérats de nanoparticules primaires de $SiO_2$, lesdites nanoparticules primaires de $SiO_2$ desdits agglomérats présentant une granulométrie moyenne en nombre inférieure à 70nm, avantageusement inférieure à 60nm, de préférence inférieure à 50nm, lesdits agglomérats de particules de $SiO_2$ et/ou des nanoparticules de $SiO_2$ de ceux-ci étant fonctionnalisés avec des groupements choisis parmi le groupe constitué de diméthyloxy, triméthyloxy et leur mélange de manière à présenter une teneur résiduelle relative en groupe SiOH comprise entre 40% et 60% de la teneur résiduelle en SiOH de particule de silice pyrogénique contenant environ 2 groupes SiOH par $nm^2$, lesdites particules représentant de 0,6% à 6% en poids, avantageusement de 1% à 6% en poids, de préférence de 2% à 4% en poids de la suspension;
    - un alcool ou un mélange d'alcools, ledit alcool ou lesdits alcools comprenant avantageusement de 1 à 6 atomes de carbone, de préférence de 1 à 4 atomes de carbone,
    - du TEOS représentant de 2 à 20% en poids, en particulier de 3 à 15% en poids de la suspension,

- un acide, et
- de l'eau ;

ladite suspension acide fraîche étant appliquée sur un support pour former le revêtement moins de 12 heures, avantageusement moins de 6 heures après mélange de l'acide au TEOS en présence d'eau lorsque ce mélange est opéré et maintenu à 20°C ou moins , pour former après séchage ledit revêtement superhydrophobe, ladite suspension acide fraîche étant telle :

(a) qu'elle contient une quantité d'eau telle que le rapport molaire eau/TEOS soit compris entre 0,5 et 2,5, avantageusement entre 0,5 et 2, de préférence entre 0,5 et 1,5,
(b) qu'elle contient une quantité de TEOS telle que le rapport en poids TEOS/ particules solides soit compris entre 1 et 10, et
(c) qu'elle contient une quantité d'acide pour que le pH de la suspension fraîche mesuré à 20°C soit inférieur à 3, avantageusement inférieur ou égal à 1.

2. Revêtement superhydrophobe selon la revendication 1, **caractérisé en ce qu'**elle contient une quantité de TEOS telle que le rapport en poids TEOS/ particules solides soit compris entre 2 et 10, de préférence entre 2 et 5, et/ou, de préférence et, **en ce qu'**elle contient une quantité d'acide pour que le pH de la suspension fraîche mesuré à 20°C soit inférieur à 2, en particulier inférieur à 1.

3. Revêtement superhydrophobe suivant l'une quelconque des revendications 1 à 2, **caractérisé en ce que** pour la suspension acide fraîche, le rapport molaire eau/TEOS est compris entre 0,8 et 1,2, tandis que la quantité de TEOS est telle que le rapport en poids TEOS/ particules solides soit compris entre 2 et 5.

4. Revêtement superhydrophobe selon l'une quelconque des revendications précédentes, **caractérisé en ce que** les nanoparticules primaires de $SiO_2$ desdits agglomérats présentant une granulométrie moyenne en nombre inférieure à 70nm ont une dispersion granulométrique comportant une fraction de nanoparticules de moins de 40nm, en particulier de moins de 20nm, et une autre fraction de nanoparticules de plus de 80nm, voire de plus de 100nm.

5. Revêtement superhydrophobe selon l'une quelconque des revendications précédentes, **caractérisé en ce que** les nanoparticules primaires de $SiO_2$ desdits agglomérats ont une dispersion granulométrique des nanoparticules primaires de $SiO_2$ présentant un degré de polydispersité en nombre à 90% supérieur à 0,2, avantageusement supérieur à 0,5, de préférence supérieur à 0,7, plus particulièrement supérieur à 1.

6. Revêtement superhydrophobe selon l'une quelconque des revendications précédentes, **caractérisé en ce que** les particules solides de la suspension acide fraîche sont constituées à plus de 95% en poids, avantageusement à plus de 97% en poids, de préférence à plus de 99% en poids d'agglomérats de nanoparticules primaires de $SiO_2$, lesdites nanoparticules présentant granulométrie moyenne en nombre inférieure à 40nm, lesdits agglomérats de nanoparticules de $SiO_2$ et/ou des nanoparticules de $SiO_2$ de ceux-ci étant fonctionnalisés avec des groupements choisis parmi le groupe constitué de diméthyloxy, triméthyloxy et leur mélange, lesdites particules représentant de 1 à 6% en poids de la suspension acide fraîche, avantageusement de 2 à 5% en poids de la suspension acide fraîche.

7. Revêtement superhydrophobe suivant l'une quelconque des revendications précédentes, **caractérisé en ce qu'**il comprend au moins une couche intérieure située sous la couche extérieure, ladite couche intérieure étant une couche comportant au moins des atomes de silicium, en particulier du $SiO_2$.

8. Revêtement superhydrophobe selon l'une quelconque des revendications précédentes, **caractérisé en ce que** pour la suspension acide fraîche, le rapport molaire particules de $SiO_2$ / TEOS est compris entre 0,8 et 1,2.

9. Revêtement superhydrophobe selon l'une quelconque des revendications précédentes, **caractérisé en ce que** les agglomérats de nanoparticules de $SiO_2$ de la suspension acide fraîche présentent une surface spécifique comprise entre $50m^2/g$ et $150m^2/g$.

10. Revêtement superhydrophobe selon l'une quelconque des revendications précédentes, **caractérisé en ce qu'**au moins 95% de la couche extérieure est constitué essentiellement d'une couche de particules de $SiO_2$ reliées entre elles par des liens -O-Si-O-.

11. Revêtement superhydrophobe selon l'une quelconque des revendications précédentes, **caractérisé en ce que** ladite couche extérieure présente avec un facteur d'agrandissement de 50, c'est-à-dire à l'échelle d'environ 2,2mm, comprise entre $1,1\mu$m et $20\mu$m une face extérieure présentant une moyenne quadradique de la rugosité (root mean square surface roughness) comprise entre $1,1\mu$m et $20\mu$m, et/ou un facteur de rugosité de Wenzel supérieur à 1,2.

**12.** Produit dont une face ou couche primaire recouvrant cette face présente une résistance au milieu acide de la suspension acide fraîche pendant au moins 1 minute, ladite face ou couche primaire recouvrant cette face étant munie d'un revêtement superhydrophobe selon l'une quelconque des revendications précédentes.

**13.** Méthode pour appliquer un revêtement superhydrophobe suivant l'une quelconque des revendications 1 à 11, le long d'une face d'un produit, cette méthode comprenant les étapes suivantes :

- traitement de la face à recouvrir pour en éliminer au moins des corps gras et/ou des poussières;
- au moins si ladite face ne présente pas une résistance au milieu aqueux acide de la suspension acide fraîche pendant au moins 1 minute, application d'une couche primaire résistante audit milieu acide sur ladite face,
- application sur ladite face ou sur la couche primaire résistante audit milieu acide, éventuellement après mouillage de ladite face ou couche résistante au moyen d'un milieu aqueux acide, d'une suspension acide fraîche constituée au moins à 97% en poids par :

- des particules solides constituées à plus de 80% en poids, avantageusement à plus de 85% en poids, de préférence à plus de 90% en poids d'agglomérats de nanoparticules primaires de $SiO_2$, lesdites nanoparticules primaires de $SiO_2$ desdits agglomérats présentant une granulométrie moyenne en nombre inférieure à 70 nm, lesdits agglomérats de particules de $SiO_2$ et/ou des nanoparticules de $SiO_2$ de ceux-ci étant fonctionnalisés avec des groupements choisis parmi le groupe constitué de dimethyloxy, trimethyloxy et leur mélange de manière à présenter une teneur résiduelle relative en groupe SiOH comprise entre 40% et 60% de la teneur résiduelle en SiOH de particule de silice pyrogénique contenant environ 2 groupes SiOH par $nm^2$, lesdites particules représentant de 0,6% à 6% en poids de la suspension;
- un alcool ou un mélange d'alcools, ledit alcool ou lesdits alcools comprenant avantageusement de 1 à 6 atomes de carbone, de préférence de 1 à 4 atomes de carbone;
- du TEOS représentant de 2 à 20% en poids de la suspension, et
- de l'acide(s) et de l'eau;

ladite suspension acide fraîche étant telle :

(a) qu'elle contient une quantité d'eau telle que le rapport molaire eau/TEOS soit compris entre 0,5 et 2,5, avantageusement entre 0,5 et 2, de préférence entre 0,5 et 1,5,
(b) qu'elle contient une quantité de TEOS telle que le rapport en poids TEOS/ particules solides soit compris entre 1 et 10, et
(c) qu'elle contient une quantité d'acide pour que le pH de la suspension fraîche mesuré à 20°C soit inférieur à 3, avantageusement inférieur ou égal à 1,

de manière à appliquer ladite suspension sur ladite face ou couche primaire moins de 12heures après le mélange ou la mise en contact de l'acide avec le TEOS en présence d'eau, lorsque ce mélange ou cette mise en contact est opéré et maintenu à une température de 20°C ou moins ;
- élimination de la quantité excédentaire éventuelle de suspension présente sur ladite face et/ou couche primaire ,
- traitement optionnel avec un milieu aqueux acide en présence d'au moins un tensioactif, ledit milieu aqueux acide ayant avantageusement un pH inférieur à 3, et
- séchage du revêtement, ledit séchage étant avantageusement opéré à une température supérieure à 50°C pendant au moins 1 minutes, mais à une température inférieure à la température de ramollissement des agglomérats de nanoparticules de $SiO_2$,

ledit revêtement étant un revêtement superhydrophobe présentant une surface extérieure pour laquelle une goutte d'eau ($10\mu$l) placée sur cette surface extérieure en position horizontale définit un angle de contact statique de recul de plus de 135° et/ou un angle de contact statique d'avancement de plus de 135°.

**14.** Méthode suivant la revendication précédente, **caractérisée en ce que** la suspension telle que définie à la revendication 13 est préparée par mélange d'une composition constituée au moins à 97% en poids par :

- des particules solides constituées à plus de 80% en poids, avantageusement à plus de 85% en poids, de préférence à plus de 90% en poids d'agglomérats de nanoparticules primaires de SiO$_2$, lesdites nanoparticules primaires de SiO$_2$ présentant une granulométrie moyenne en nombre inférieure à 70nm, lesdits agglomérats de nanoparticules de SiO$_2$ et/ou des nanoparticules de ceux-ci étant fonctionnalisés avec des groupements choisis parmi le groupe constitué de dimethyloxy, trimethyloxy et leur mélange de manière à présenter une teneur résiduelle relative en groupe SiOH comprise entre 40% et 60% de la teneur résiduelle en SiOH de particule de silice pyrogénique contenant environ 2 groupes SiOH par nm$^2$,
- un alcool ou un mélange d'alcools,
- du TEOS, avec

un milieu aqueux acide moins de 12 heures, avantageusement moins de 6 heures, de préférence moins de 2 heures avant l'application de la suspension sur ladite face et/ou couche primaire résistante au milieu acide, lorsque ce mélange est opéré et maintenu à 20°C ou moins.

15. Méthode suivant la revendication 13 ou 14, **caractérisée en ce qu'**on applique sur ladite face ou couche primaire résistante un milieu aqueux acide, avantageusement exempt de TEOS, avant d'appliquer sur cette face ou couche au moins une composition constituée au moins à 97% en poids par :

- des particules solides constituées à plus de 80% en poids, avantageusement à plus de 85% en poids, de préférence à plus de 90% en poids d'agglomérats de nanoparticules primaires de SiO$_2$, lesdites nanoparticules primaires de SiO$_2$ présentant une granulométrie inférieure à 70nm, lesdits agglomérats de nanoparticules de SiO$_2$ et/ou des nanoparticules de ceux-ci étant fonctionnalisés avec des groupements choisis parmi le groupe constitué de dimethyloxy, trimethyloxy et leur mélange de manière à présenter une teneur résiduelle relative en groupe SiOH comprise entre 40% et 60% de la teneur résiduelle en SiOH de particule de silice pyrogénique contenant environ 2 groupes SiOH par nm$^2$,
- un alcool ou un mélange d'alcools,
- du TEOS,

cette composition étant sensiblement exempte d'eau et d'acide,
ledit milieu aqueux acide et ladite composition étant adaptés en quantité et en contenu pour former sur ladite face ou couche une suspension telle que définie à la revendication 13.

16. Méthode suivant l'une des revendications 13 à 15, **caractérisée en ce qu'**on applique sur ladite face ou sur la couche résistante un premier milieu aqueux acide, avantageusement exempt de TEOS, avant d'appliquer sur cette face ou couche (a) une composition constituée au moins à 97% en poids par :

- des particules solides constituées à plus de 80% en poids, avantageusement à plus de 85% en poids, de préférence à plus de 90% en poids d'agglomérats de particules primaires de SiO$_2$, lesdites particules primaires de SiO$_2$ présentant une granulométrie inférieure à 70nm, lesdits agglomérats de nanoparticules de SiO$_2$ étant fonctionnalisés avec des groupements choisis parmi le groupe constitué de dimethyloxy, trimethyloxy et leur mélange de manière à présenter une teneur résiduelle relative en groupe SiOH comprise entre 40% et 60% de la teneur résiduelle en SiOH de particule de silice pyrogénique contenant environ 2 groupes SiOH par nm$^2$;
- un alcool ou un mélange d'alcools,
- du TEOS,

cette composition étant sensiblement exempte d'eau et d'acide, et ensuite (b) un deuxième milieu aqueux acide, lesdits premier et deuxième milieux aqueux acides et ladite composition étant adaptés en quantité et en contenu pour former sur ladite face ou couche une suspension telle que définie à la revendication 13.

17. Méthode suivant l'une des revendications 13 à 16, **caractérisée en ce qu'**on projette ladite composition et ledit milieu aqueux acide simultanément vers ladite face, de manière à assurer le mélange de ladite composition avec ledit milieu acide pour former une suspension telle que définie à la revendication 13 au moins sur ladite face.

18. Méthode suivant l'une quelconque des revendications 13 à 17, **caractérisée en ce qu'**on applique ladite suspension et/ou ladite composition et/ou ledit milieu acide sur ladite face ou couche à une température inférieure à 30°C, de préférence comprise entre -10°C et 20°C.

19. Méthode suivant l'une quelconque des revendications 13 à 18, **caractérisée en ce que** ladite suspension déposée sur ladite face ou sur ladite couche primaire résistant audit milieu acide est adaptée pour présenter une ou plusieurs des caractéristiques des revendications 2 à 11.

**Patentansprüche**

1. Superhydrophobe Beschichtung mit einer Außenfläche, für die ein Wassertropfen (10 $\mu$l), der auf dieser Außenfläche in horizontaler Position angeordnet ist, einen statischen Rücklauf-Kontaktwinkel von mehr als 135 ° und/oder einen statischen Vorlauf-Kontaktwinkel von mehr als 135 ° definiert, wobei die Beschichtung mindestens eine Außenschicht mit einer Dicke von weniger als 500 $\mu$m umfasst, die erhalten werden kann und insbesondere durch Auftragen auf einen Träger mindestens einer frischen Säuresuspension, gebildet aus mindestens 97 Gew.-%, erhalten wird durch:

   - feste Partikel mit einer Partikelgröße von weniger als 500 $\mu$m, vorteilhaft weniger als 300 $\mu$m, wobei die festen Partikel zu über 80 Gew.-%, vorteilhaft zu über 85 Gew.-%, vorzugsweise zu mehr als 90 Gew.-% aus Agglomeraten von primären Nanopartikeln von $SiO_2$ gebildet werden, wobei die primären Nanopartikel von $SiO_2$ der Agglomerate eine zahlenmäßige durchschnittliche Partikelgröße von weniger als 70 nm, vorteilhaft von weniger als 60 nm, vorzugsweise von weniger als 50 nm aufweisen, wobei die Agglomerate von Partikeln von $SiO_2$ und/oder Nanopartikel von $SiO_2$ davon mit Gruppen funktionalisiert sind, die ausgewählt sind aus der Gruppe bestehend aus Dimethyloxy, Trimethyloxy und deren Gemisch, so dass sie einen Restgehalt in Bezug auf die SiOH-Gruppe von 40% bis 60% des SiOH-Restgehalts von pyrogenen Siliziumdioxidpartikeln mit etwa 2 SiOH-Gruppen pro $nm^2$ aufweisen, wobei die Partikel von 0,6 bis 6 Gew.-%, vorteilhaft von 1 bis 6 Gew.-%, vorzugsweise von 2 bis 4 Gew.-% der Suspension ausmachen;
   - einen Alkohol oder eine Mischung von Alkoholen, wobei der Alkohol oder die Alkohole vorteilhaft von 1 bis 6 Kohlenstoffatome, vorzugsweise von 1 bis 4 Kohlenstoffatome umfassen,
   - TEOS mit einem Anteil von 2 bis 20 Gew.-%, insbesondere von 3 bis 15 Gew.-% der Suspension,
   - eine Säure, und
   - Wasser;

   wobei die frische Säuresuspension auf einen Träger aufgebracht wird, um die Beschichtung innerhalb von 12 Stunden, vorteilhaft innerhalb von 6 Stunden nach dem Mischen der Säure mit TEOS bei Vorhandensein von Wasser zu bilden, wenn diese Mischung gehandhabt und bei 20 °C oder weniger gehalten wird, um die superhydrophobe Beschichtung nach dem Trocknen zu bilden,
   wobei die frische Säuresuspension derart ist, dass sie

   (a) eine solche Wassermenge enthält, dass das Molverhältnis Wasser/TEOS zwischen 0,5 und 2,5, vorteilhaft zwischen 0,5 und 2, vorzugsweise zwischen 0,5 und 1,5 enthalten ist,
   (b) eine Menge an TEOS enthält, so dass das Gewichtsverhältnis TEOS/feste Partikel zwischen 1 und 10 enthalten ist, und
   (c) eine Menge an Säure enthält, so dass der pH-Wert der frischen Suspension, gemessen bei 20 °C, kleiner als 3, vorteilhaft kleiner als oder gleich 1 ist.

2. Superhydrophobe Beschichtung nach Anspruch 1, **dadurch gekennzeichnet, dass** sie eine Menge an TEOS enthält, so dass das Gewichtsverhältnis TEOS/feste Partikel zwischen 2 und 10 liegt, vorzugsweise zwischen 2 und 5 und/oder, vorzugsweise und, dass sie eine Menge an Säure enthält, damit der pH-Wert der frischen Suspension, gemessen bei 20 °C, niedriger als 2, insbesondere niedriger als 1 ist.

3. Superhydrophobe Beschichtung nach einem der Ansprüche 1 bis 2, **dadurch gekennzeichnet, dass** für die frische Säuresuspension das Molverhältnis Wasser/TEOS zwischen 0,8 und 1,2 liegt, während die Menge an TEOS so bemessen ist, dass das Gewichtsverhältnis TEOS/feste Partikel zwischen 2 und 5 liegt.

4. Superhydrophobe Beschichtung nach einem der vorhergehenden Ansprüche, **dadurch gekennzeichnet, dass** die primären Nanopartikel von $SiO_2$ der Agglomerate mit einer zahlenmäßigen durchschnittlichen Partikelgröße von weniger als 70 nm eine Partikelgrößendispersion aufweisen, die einen Anteil von Nanopartikeln von weniger als 40 nm, insbesondere weniger als 20 nm, und einen weiteren Anteil von Nanopartikeln von mehr als 80 nm oder sogar mehr als 100 nm umfasst.

5. Superhydrophobe Beschichtung nach einem der vorhergehenden Ansprüche, **dadurch gekennzeichnet, dass** die primären Nanopartikel von $SiO_2$ der Agglomerate eine Partikelgrößendispersion der primären Nanopartikeln von

SiO$_2$ aufweisen, mit einem Grad der Polydispersität in der Anzahl bei 90% größer als 0,2, vorteilhaft größer als 0,5, vorzugsweise größer als 0,7, insbesondere größer als 1.

6. Superhydrophobe Beschichtung nach einem der vorhergehenden Ansprüche, **dadurch gekennzeichnet, dass** die festen Partikel der frischen Säuresuspension zu mehr als 95 Gew.-%, vorteilhaft zu mehr als 97 Gew.-%, vorzugsweise zu mehr als 99 Gew.-% aus Agglomeraten von primären Nanopartikeln von SiO$_2$ gebildet werden, wobei die Nanopartikel eine zahlenmäßige durchschnittliche Partikelgröße von weniger als 40 nm aufweisen, wobei die Agglomerate von Nanopartikeln von SiO$_2$ und/oder Nanopartikel von SiO$_2$ davon mit Gruppen funktionalisiert sind, die ausgewählt sind aus der Gruppe bestehend aus Dimethyloxy, Trimethyloxy und deren Gemisch, wobei die Partikel von 1 bis 6 Gew.-% der frischen Säuresuspension, vorteilhaft von 2 bis 5 Gew.-% der frischen Säuresuspension ausmachen.

7. Superhydrophobe Beschichtung nach einem der vorstehenden Ansprüche, **dadurch gekennzeichnet, dass** sie mindestens eine Innenschicht umfasst, gelegen unter der Außenschicht, wobei die Innenschicht eine Schicht mit mindestens Siliziumatomen ist, insbesondere von SiO$_2$.

8. Superhydrophobe Beschichtung nach einem der vorhergehenden Ansprüche, **dadurch gekennzeichnet, dass** für die frische Säuresuspension das Molverhältnis SiO$_2$/TEOS-Partikel zwischen 0,8 und 1,2 liegt.

9. Superhydrophobe Beschichtung nach einem der vorhergehenden Ansprüche, **dadurch gekennzeichnet, dass** die Agglomerate von Nanopartikeln von SiO$_2$ der frischen Säuresuspension eine spezifische Oberfläche von 50 m$^2$/g bis 150 m$^2$/g aufweisen.

10. Superhydrophobe Beschichtung nach einem der vorhergehenden Ansprüche, **dadurch gekennzeichnet dass** mindestens 95% der Außenschicht im Wesentlichen aus einer Schicht von Partikel von SiO$_2$ gebildet werden, die durch -O-Si-O-Bindungen miteinander verbunden sind.

11. Superhydrophobe Beschichtung nach einem der vorhergehenden Ansprüche, **dadurch gekennzeichnet, dass** die Außenschicht mit einem Vergrößerungsfaktor von 50, d. h. bei einer Skala von etwa 2,2 mm, zwischen 1,1 μm und 20 μm, eine Außenfläche mit einer mittleren quadratischen Rauigkeit (Grundoberflächenrauigkeit) zwischen 1,1 μm und 20 μm und/oder einen Wenzel-Rauigkeitsfaktor von mehr als 1,2 aufweist.

12. Produkt, bei dem eine Seite oder Grundierschicht, die diese Fläche bedeckt, eine Beständigkeit gegen das saure Medium der frischen Säuresuspension für mindestens 1 Minute aufweist, wobei die Seite oder Grundierschicht, die diese Fläche bedeckt, mit einer superhydrophoben Beschichtung nach einem der vorhergehenden Ansprüche versehen ist.

13. Verfahren zum Aufbringen einer superhydrophoben Beschichtung nach einem der Ansprüche 1 bis 11 entlang einer Seite eines Produkts, wobei das Verfahren die folgenden Schritte umfasst:

- Behandeln der zu bedeckenden Seite, um zumindest Fett und/oder Staub zu entfernen;
- zumindest wenn diese Seite mindestens 1 Minute lang keine Beständigkeit in dem sauren wässrigen Medium der frischen Säuresuspension aufweist, Auftragen einer gegen das saure Medium beständigen Grundierschicht auf diese Seite,
- Auftragen einer frischen Säuresuspension auf diese Seite oder auf die gegen das saure Medium beständige Grundierschicht, gegebenenfalls nach dem Benetzen der Seite oder der gegen das saure Medium beständigen Schicht, die aus mindestens 97 Gew.-% gebildet wird durch:

- feste Partikel, gebildet zu mehr als 80 Gew.-%, vorteilhaft zu mehr als 85 Gew.-%, vorzugsweise zu mehr als 90 Gew.-% aus Agglomeraten von primären Nanopartikeln von SiO$_2$, wobei die primären Nanopartikel von SiO$_2$ der Agglomerate eine zahlenmäßige durchschnittliche Partikelgröße von weniger als 70 nm aufweisen, wobei die Agglomerate von Partikeln von SiO$_2$ und/oder Nanopartikel von SiO$_2$ davon mit Gruppen funktionalisiert sind, die ausgewählt sind aus der Gruppe bestehend aus Dimethyloxy, Trimethyloxy und deren Gemisch, so dass sie einen Restgehalt in Bezug auf die SiOH-Gruppe von 40% bis 60% des SiOH-Restgehalts von pyrogenen Siliziumdioxidpartikeln mit etwa 2 SiOH-Gruppen pro nm$^2$ aufweisen, wobei die Partikel von 0,6 bis 6 Gew.-% der Suspension ausmachen;
- einen Alkohol oder eine Mischung von Alkoholen, wobei der Alkohol oder die Alkohole vorteilhaft von 1 bis 6 Kohlenstoffatome, vorzugsweise von 1 bis 4 Kohlenstoffatome umfassen:

- TEOS mit einem Anteil von 2 bis 20 Gew.-% der Suspension, und
- Säure(n) und Wasser;

wobei die frische Säuresuspension derart ist, dass sie

(a) eine solche Wassermenge enthält, dass das Molverhältnis Wasser/TEOS zwischen 0,5 und 2,5, vorteilhaft zwischen 0,5 und 2, vorzugsweise zwischen 0,5 und 1,5 enthalten ist,
(b) eine Menge an TEOS enthält, so dass das Gewichtsverhältnis TEOS/feste Partikel zwischen 1 und 10 enthalten ist, und
(c) eine Menge an Säure enthält, so dass der pH-Wert der frischen Suspension, gemessen bei 20 °C, kleiner als 3, vorteilhaft kleiner als oder gleich 1 ist,

um die Suspension innerhalb von 12 Stunden nach dem Mischen oder Kontaktieren der Säure mit dem TEOS bei Vorhandensein von Wasser auf die Seite oder Grundierschicht aufzubringen, wenn dieses Mischen oder Kontaktieren gehandhabt und auf einer Temperatur von 20 °C oder weniger gehalten wird;
- Entfernen einer überschüssigen Menge an Suspension, die auf der Seite und/oder der Grundierschicht vorhanden ist,
- optionale Behandlung mit einem sauren wässrigen Medium bei Vorhandensein mindestens eines Tensids, wobei das saure wässrige Medium vorteilhaft einen pH-Wert von weniger als 3 aufweist, und
- Trocknen der Beschichtung, wobei das Trocknen vorteilhaft bei einer Temperatur von mehr als 50 °C für mindestens 1 Minute, aber bei einer Temperatur unter der Erweichungstemperatur der Agglomerate von Nanopartikeln von $SiO_2$ durchgeführt wird,

wobei die Beschichtung eine superhydrophobe Beschichtung mit einer Außenfläche ist, für die ein Wassertropfen (10 µl), der auf der Außenfläche in horizontaler Position angeordnet ist, einen statischen Rücklauf-Kontaktwinkel von mehr als 135° und/oder einen statischen Vorlauf-Kontaktwinkel von mehr als 135° definiert.

14. Verfahren nach dem vorhergehenden Anspruch, **dadurch gekennzeichnet, dass** die Suspension nach Anspruch 13 durch Mischen einer Zusammensetzung hergestellt wird, gebildet aus mindestens 97 Gew.-% durch:

- feste Partikel, gebildet zu mehr als 80 Gew.-%, vorteilhaft zu mehr als 85 Gew.-%, vorzugsweise zu mehr als 90 Gew.-% aus Agglomeraten von primären Nanopartikeln von $SiO_2$, wobei die primären Nanopartikel von $SiO_2$ eine zahlenmittlere Partikelgröße von weniger als 70 nm aufweisen, wobei die Agglomerate von Nanopartikeln von $SiO_2$ und/oder Nanopartikel davon mit Gruppen funktionalisiert sind, die ausgewählt sind aus der Gruppe bestehend aus Dimethyloxy, Trimethyloxy und deren Gemisch, so dass sie einen relativen Restgehalt an SiOH-Gruppen von zwischen 40% und 60% des Rest-SiOH-Gehalts an pyrogenen Siliziumdioxidpartikeln mit etwa 2 SiOH-Gruppen pro $nm^2$ aufweisen,
- einen Alkohol oder eine Mischung von Alkoholen,
- TEOS,

mit einem sauren wässrigen Medium weniger als 12 Stunden, vorzugsweise weniger als 6 Stunden, vorzugsweise weniger als 2 Stunden vor dem Auftragen der Suspension auf die säurebeständige Seite und/oder Grundierschicht, wenn diese Mischung gehandhabt und bei 20 °C oder niedriger gehalten wird.

15. Verfahren nach Anspruch 13 oder 14, **dadurch gekennzeichnet, dass** ein saures wässriges Medium, vorzugsweise frei von TEOS, auf die beständige Seite oder Grundierschicht aufgebracht wird, bevor auf diese Seite oder Schicht mindestens eine Zusammensetzung aufgebracht wird, die aus mindestens 97 Gew.-% besteht, durch:

- feste Partikel, gebildet zu mehr als 80 Gew.-%, vorteilhaft zu mehr als 85 Gew.-%, vorzugsweise zu mehr als 90 Gew.-% aus Agglomeraten von primären Nanopartikeln von $SiO_2$, wobei die primären Nanopartikel von $SiO_2$ eine Partikelgröße von weniger als 70 nm aufweisen, wobei die Agglomerate von Nanopartikeln von $SiO_2$ und/oder Nanopartikel davon mit Gruppen funktionalisiert sind, die ausgewählt sind aus der Gruppe bestehend aus Dimethyloxy, Trimethyloxy und deren Gemisch, so dass sie einen relativen Restgehalt auf die SiOH-Gruppe von 40% bis 60% des SiOH-Restgehalts von pyrogenen Siliziumdioxidpartikeln mit etwa 2 SiOH-Gruppen pro $nm^2$ aufweisen,
- einen Alkohol oder eine Mischung von Alkoholen,
- TEOS, wobei die Zusammensetzung im Wesentlichen frei von Wasser und Säure ist, wobei das saure wässrige Medium und die Zusammensetzung in Menge und Gehalt angepasst sind, um auf der Seite oder Schicht eine Suspension nach Anspruch 13 zu bilden.

16. Verfahren nach einem der Ansprüche 13 bis 15, **dadurch gekennzeichnet, dass** ein erstes saures wässriges Medium, vorteilhaft frei von TEOS, auf die beständige Seite oder Schicht aufgebracht wird, bevor auf die Seite oder Schicht (a) eine Zusammensetzung aufgebracht wird, die aus mindestens 97 Gew.-% besteht, durch:

- feste Partikel, gebildet zu mehr als 80 Gew.-%, vorteilhaft zu mehr als 85 Gew.-%, vorzugsweise zu mehr als 90 Gew.-% aus Agglomeraten von primären Partikeln von $SiO_2$, wobei die primären Partikel von $SiO_2$ eine Partikelgröße von weniger als 70 nm aufweisen, die Agglomerate von Nanopartikeln von $SiO_2$ mit Gruppen funktionalisiert sind, die ausgewählt sind aus der Gruppe bestehend aus Dimethyloxy, Trimethyloxy und deren Gemisch, so dass sie einen relativen Restgehalt auf die SiOH-Gruppe von 40% bis 60% des SiOH-Restgehalts von pyrogenen Siliziumdioxidpartikeln mit etwa 2 SiOH-Gruppen pro $nm^2$ aufweisen;
- einen Alkohol oder eine Mischung von Alkoholen,
- TEOS, wobei diese Zusammensetzung im Wesentlichen frei von Wasser und Säure ist, und dann (b) ein zweites saures wässriges Medium, wobei das erste und zweite saure wässrige Medium und die Zusammensetzung in Menge und Gehalt angepasst sind, um auf der Seite oder Schicht eine Suspension nach Anspruch 13 zu bilden.

17. Verfahren nach einem der Ansprüche 13 bis 16, **dadurch gekennzeichnet, dass** die Zusammensetzung und das saure wässrige Medium gleichzeitig auf die Seite projiziert werden, um das Mischen der Zusammensetzung mit dem sauren Medium sicherzustellen, zum Bilden einer Suspension nach Anspruch 13 zumindest auf der Seite.

18. Verfahren nach einem der Ansprüche 13 bis 17, **dadurch gekennzeichnet, dass** die Suspension und/oder die Zusammensetzung und/oder das saure Medium bei einer Temperatur von weniger als 30 °C, vorzugsweise zwischen -10 °C und 20 °C, auf die Seite oder Schicht aufgebracht wird.

19. Verfahren nach einem der Ansprüche 13 bis 18, **dadurch gekennzeichnet, dass** die auf die Seite oder Grundierschicht, die gegen das saure Medium beständig ist, aufgetragene Suspension geeignet ist, eine oder mehrere der Eigenschaften der Ansprüche 2 bis 11 zu zeigen.

**Claims**

1. Superhydrophobic coating comprising an outer surface for which a drop of water (10 $\mu$l) placed on this outer surface in a horizontal position defines a static receding contact angle of more than 135 ° and/or a static advancing contact angle of more than 135 °, the said coating comprising at least one outer layer with a thickness of less than 500$\mu$m obtainable, in particular obtained by applying on a support at least one fresh acid suspension consisting of at least 97% by weight by:

- solid particles with a particle size of less than 500 $\mu$m, advantageously less than 300 $\mu$m, said solid particles consisting of more than 80% by weight, advantageously more than 85% by weight, preferably more than 90% by weight of agglomerates of $SiO_2$ primary nanoparticles, the $SiO_2$ primary nanoparticles of said agglomerates having a number average particle size of less than 70 nm, advantageously less than 60 nm, preferably less than 50 nm, said $SiO_2$ particle agglomerates and/or $SiO_2$ nanoparticles thereof being functionalized with groups selected from the group consisting of dimethyloxy, trimethyloxy and their mixture in order to have a relative residual content of SiOH group between 40% and 60% of the SiOH residual content of pyrogenic silica particle containing about 2 SiOH groups per $nm^2$, said particles representing from 0.6% to 6% by weight, preferably from 1% to 6% by weight, preferably from 2% to 4% by weight of the suspension;
- an alcohol or a mixture of alcohols, said alcohol or said alcohols advantageously comprising 1 to 6 carbon atoms, preferably 1 to 4 carbon atoms,
- TEOS representing 2 to 20% by weight, in particular of 3 to 15% by weight of the suspension,
- an acid, and
- water;

said fresh acid suspension being applied on a support to form the coating less than 12 hours, advantageously less than 6 hours after mixing the acid with TEOS in the presence of water when this mixture is operated and maintained at 20 °C or less, to form after drying said superhydrophobic coating, said fresh acid suspension being such:

(a) that it contains a quantity of water such that the water / TEOS molar ratio is between 0.5 and 2.5, advantageously between 0.5 and 2, preferably between 0.5 and 1.5,
(b) that it contains a quantity of TEOS such that the weight ratio TEOS / solid particles is between 1 and 10, and
(c) that it contains an amount of acid so that the pH of the fresh suspension measured at 20 °C is less than 3, advantageously less than or equal to 1.

2. Superhydrophobic coating according to Claim 1, **characterized in that** it contains a quantity of TEOS such that the weight ratio TEOS / solid particles is between 2 and 10, preferably between 2 and 5, and/or, preferably and, **in that** it contains an amount of acid so that the pH of the fresh suspension measured at 20 °C is less than 2, in particular less than 1.

3. Superhydrophobic coating according to any one of Claims 1 to 2, **characterized in that** for the fresh acid suspension, the water / TEOS molar ratio is between 0.8 and 1.2, whereas the amount of TEOS is such that the weight ratio TEOS / solid particles is between 2 and 5.

4. Superhydrophobic coating according to any one of the preceding claims, **characterized in that** the primary $SiO_2$ nanoparticles of said agglomerates having a number average particle size of less than 70 nm have a particle size dispersion comprising a fraction of nanoparticles of less than 40 nm, in particular less than 20nm, and another fraction of nanoparticles of more than 80nm, or even more than 100nm.

5. Superhydrophobic coating according to any one of the preceding claims, **characterized in that** the primary $SiO_2$ nanoparticles of said agglomerates have a particle size dispersion of the primary $SiO_2$ nanoparticles having a degree of polydispersity in number at 90% greater than 0.2, advantageously greater than 0.5, preferably greater than 0.7, more particularly greater than 1.

6. Superhydrophobic coating according to any one of the preceding claims, **characterized in that** the solid particles of the fresh acid suspension consist of more than 95% by weight, advantageously more than 97% by weight, preferably more than 99% by weight of agglomerates of primary $SiO_2$ nanoparticles, said nanoparticles having a number average particle size of less than 40 nm, said agglomerates of $SiO_2$ nanoparticles and/or $SiO_2$ nanoparticles thereof being functionalized with groups selected from the group consisting of dimethyloxy, trimethyloxy and their mixture, said particles representing from 1 to 6% by weight of the fresh acid suspension, advantageously from 2 to 5% by weight of the fresh acid suspension.

7. Superhydrophobic coating according to any one of the preceding claims, **characterized in that** it comprises at least one inner layer located under the outer layer, said inner layer being a layer comprising at least silicon atoms, in particular $SiO_2$.

8. Superhydrophobic coating according to any one of the preceding claims, **characterized in that** for the fresh acid suspension, the molar ratio of $SiO_2$ particles / TEOS is between 0.8 and 1.2.

9. Superhydrophobic coating according to any one of the preceding claims, **characterized in that** the agglomerates of $SiO_2$ nanoparticles of the fresh acid suspension have a specific surface area between 50 $m^2/g$ and 150$m^2/g$.

10. Superhydrophobic coating according to any one of the preceding claims, **characterized in that** at least 95% of the outer layer consists essentially of a layer of $SiO_2$ particles interconnected by -O-Si-O- bonds.

11. Superhydrophobic coating according to any one of the preceding claims, **characterized in that** said outer layer has with an enlargement factor of 50, that is to say at a scale of about 2.2mm, between 1.1$\mu$m and 20$\mu$m, an outer face having a root mean square surface roughness (roughness average) between 1.1$\mu$m and 20$\mu$m, and/or a Wenzel roughness factor greater than 1.2.

12. A product with a face or primary layer covering this face having a resistance to the acid medium of the fresh acid suspension for at least 1 minute, said face or primary layer covering this face being provided with a superhydrophobic coating according to any one of the preceding claims.

13. A method for applying a superhydrophobic coating according to any one of claims 1 to 11 along one face of a product, said method comprising the following steps:

- treating the face to be coated to remove at least fatty substances and/or dust;
- at least if said face does not exhibit resistance to the aqueous acid medium of the fresh acid suspension for at least 1 minute, application of a primary layer resistant to said acid medium on said face,
- application on said face or on the primary layer resistant to said acid medium, possibly after wetting said resistant face or layer by means of an acid aqueous medium, of a fresh acid suspension consisting of at least 97% by weight by:

- solid particles consisting of more than 80% by weight, advantageously more than 85% by weight, preferably more than 90% by weight, of agglomerates of primary $SiO_2$ nanoparticles, said primary $SiO_2$ nanoparticles of said agglomerates having a number average particle size of less than 70 nm, said agglomerates of $SiO_2$ particles and/or $SiO_2$ nanoparticles thereof being functionalized with groups selected from the group consisting of dimethyloxy, trimethyloxy and their mixture so as to have a relative residual content of SiOH group between 40% and 60% of the SiOH residual content of pyrogenic silica particle containing about 2 SiOH groups per $nm^2$, said particles representing 0.6% to 6% by weight of the suspension;
- an alcohol or a mixture of alcohols, said alcohol or said alcohols advantageously comprising from 1 to 6 carbon atoms, preferably from 1 to 4 carbon atoms;
- TEOS representing from 2 to 20% by weight of the suspension, and
- acid (s) and water;

said fresh acid suspension being such:

(a) that it contains a quantity of water such that the water / TEOS molar ratio is between 0.5 and 2.5, advantageously between 0.5 and 2, preferably between 0.5 and 1.5,
(b) that it contains a quantity of TEOS such that the weight ratio TEOS / solid particles is between 1 and 10, and
(c) that it contains an amount of acid so that the pH of the fresh suspension measured at 20 °C is less than 3, advantageously less than or equal to 1,

so as to apply the said suspension on said face or on said primary layer less than 12 hours after mixing or contacting the acid with the TEOS in the presence of water, when this mixing or bringing into contact is operated and maintained at a temperature of 20 °C or less;
- elimination of the possible excess quantity of suspension present on said face and/or primary layer;
- optional treatment with an acid aqueous medium in the presence of at least one surfactant, said acid aqueous medium advantageously having a pH of less than 3, and
- drying the coating, said drying being advantageously carried out at a temperature above 50 °C for at least 1 minute, but at a temperature below the softening temperature of the agglomerates of $SiO_2$ nanoparticles,

the said coating being a superhydrophobic coating comprising an outer surface for which a drop of water (10 µl) placed on this outer surface in a horizontal position defines a static receding contact angle of more than 135 ° and/or a static advancing contact angle of more than 135 °.

14. Method according to the preceding claim, **characterized in that** the suspension as defined in claim 13 is prepared by mixing a composition consisting of at least 97% by weight by:

- solid particles consisting of more than 80% by weight, advantageously more than 85% by weight, preferably greater than 90% by weight, of agglomerates of primary $SiO_2$ nanoparticles, said primary $SiO_2$ nanoparticles having a number average particle size of less than 70 nm, said agglomerates of $SiO_2$ nanoparticles and/or nanoparticles thereof being functionalized with groups selected from the group consisting of dimethyloxy, trimethyloxy and their mixture so as to have a relative residual content in SiOH group of between 40% and 60% of the residual SiOH content of SiOH particle of pyrogenic silica containing about 2 SiOH groups per $nm^2$,
- an alcohol or a mixture of alcohols,
- TEOS, with

an aqueous acid medium less than 12 hours, advantageously less than 6 hours, preferably less than 2 hours before the application of the suspension on said face and/or primary layer resistant to the acid medium, when this mixture is operated and maintained at 20 °C or less.

15. Method according to Claim 13 or 14, **characterized in that** an acid aqueous medium, advantageously free of TEOS, is applied on the said face or resistant primary layer resistant, before applying on this face or layer at least one composition consisting of at least 97 % by weight by:

- solid particles consisting of more than 80% by weight, advantageously more than 85% by weight, preferably more than 90% by weight of agglomerates of primary $SiO_2$ nanoparticles, said primary $SiO_2$ nanoparticles having a particle size of less than 70 nm, said agglomerates of $SiO_2$ nanoparticles and/or nanoparticles thereof being functionalized with groups selected from the group consisting of dimethyloxy, trimethyloxy and their mixture so as to have a relative residual content of SiOH group between 40% and 60% of the residual SiOH content of pyrogenic silica particle containing about 2 SiOH groups per $nm^2$,
- an alcohol or a mixture of alcohols,
- TEOS,

this composition being substantially free of water and acid,
said acid aqueous medium and said composition being adapted in quantity and content to form on said face or layer a suspension as defined in claim 13.

16. Method according to one of Claims 13 to 15, **characterized in that** a first aqueous acid medium, advantageously free of TEOS, is applied on the said face or on the resistant layer, before applying on this face or layer (a) a composition consisting of at least 97% by weight of:

- solid particles consisting of more than 80% by weight, preferably more than 85% by weight, preferably more than 90% by weight of agglomerates of primary $SiO_2$ particles, said primary $SiO_2$ particles having a particle size of less than 70 nm, said agglomerates of $SiO_2$ nanoparticles being functionalized with groups selected from the group consisting of dimethyloxy, trimethyloxy and their mixture so as to have a relative residual content of SiOH group between 40 % and 60% of the residual SiOH content of pyrogenic silica particle containing about 2 SiOH groups per $nm^2$;
- an alcohol or a mixture of alcohols,
- TEOS,

this composition being substantially free of water and acid, and then (b) a second aqueous acid medium,
said first and second aqueous acid media and said composition being adapted in quantity and in content for forming on said face or layer a suspension as defined in claim 13.

17. Method according to one of Claims 13 to 16, **characterized in that** said composition and said acid aqueous medium are sprayed simultaneously towards said face, so as to ensure the mixing of said composition with said acid medium to form a suspension as defined in claim 13 at least on said face.

18. Method according to any one of claims 13 to 17, **characterized in that** said suspension and/or said composition and/or said acid medium are applied on said face or layer at a temperature below 30 °C, preferably between -10 °C and 20 °C.

19. Method according to any one of claims 13 to 18, **characterized in that** said suspension deposited on said face or on said primary layer resistant to said acid medium is adapted to exhibit one or more of the features of claims 2 to 11.

Etape 0 : nettoyage et dégraissage du support

Etape 1 : test résistance à l'acide

Etape 2 : contrôle de la résistance au milieu acide

résistant à l'acide

Non                                    oui

Etape 3 : couche primaire

Etape 4 : application d'une suspension

Etape 5 : élimination de la suspension en excès

Etape 6 : lavage

Etape 7 : séchage

Etape 8 : Contrôle de qualité

**<u>Fig 1</u>**

Etape 0 : nettoyage et dégraissage du support

Etape 1 : test résistance à l'acide

Etape 2 : contrôle de la résistance au milieu acide

résistant à l'acide

Non                                 oui

Etape 3 : couche primaire

Etape 4A : application d'un milieu acide (composition II)

Etape 4B : application de la composition I (éventuellement avec une partie de composition II)

Etape 5 : élimination de la suspension en excès

Etape 6 : lavage

Etape 7 : séchage

Etape 8 : Contrôle de qualité

**Fig 2**

Etape 0 : nettoyage et dégraissage du support

Etape 1 : test résistance à l'acide

Etape 2 : contrôle de la résistance au milieu acide

résistant à l'acide

Non                                          oui

Etape 3 : couche primaire

Etape 4B : application de la composition I

Etape 4A : application d'un milieu acide (composition II)

(éventuellement avec une partie de composition I)

Etape 5 : élimination de la suspension en excès

Etape 6 : lavage

Etape 7 : séchage

Etape 8 : Contrôle de qualité

## Fig 3

Etape 0 : nettoyage et dégraissage du support

Etape 1 : test résistance à l'acide

Etape 2 : contrôle de la résistance au milieu acide

résistant à l'acide

Non                                      oui

Etape 3 : couche primaire

Optionnel Etape 4bis : application d'un milieu acide (composition II)

Etape 4 : pulvérisation simultanée des compositions I et II

Etape 5 : élimination de la suspension en excès

Etape 6 : lavage

Etape 7 : séchage

Etape 8 : Contrôle de qualité

**Fig 4**

## RÉFÉRENCES CITÉES DANS LA DESCRIPTION

**Documents brevets cités dans la description**

- WO 2007102960 A
- EP 2116518 A
- US 20120021177 A
- US 20080156224 A
- BE 2008000065 W
- US 20100196811 A
- US 20070281878 A
- US 2007281878 A
- US 20040175579 A

**Littérature non-brevet citée dans la description**

- **G.W. SEARS.** *Anal. Chem.,* 1956, vol. 28
- **NORMAN R. MOWRER.** *Polysiloxane coatings innovations, www.corrdefense.org/Academia%20Government%20and%20Industry/T-63.pdf.*
- **DE R. RIOBOO ; B. DELATTRE ; D. DUVIVIER ; A. VAILLANT ; J. DE CONINCK.** Superhydrophobicity and liquid repellency of solutions on polypropylene. *Adv. Colloid Interface Sci.,* 2012, vol. 175, 1-10